# EUROPÄISCHE PATENTANMELDUNG

(11) **EP 4 203 257 A1**
(43) Veröffentlichungstag der Anmeldung: **28.06.2023**
(21) Anmeldenummer: 21217167.2
(22) Anmeldetag: 22.12.2021
(51) Int. Cl.: H02K 3/28

(54) **STATOR FÜR EINE ELEKTRISCHE MASCHINE, ELEKTRISCHE MASCHINE UND FAHRZEUG**

(71) Anmelder: Valeo eAutomotive Germany GmbH, 91056 Erlangen (DE)
(72) Erfinder: Dotz, Boris, 97616 Bad Neustadt a.d.Saale (DE)
(74) Vertreter: Valeo Powertrain Systems

(57) **Zusammenfassung**

Stator (1) für eine elektrische Maschine (101), aufweisend einen Statorkern (2), welcher eine Längsachse (3), eine Stirnseite (4), eine der Stirnseite (4) gegenüberliegende weitere Stirnseite (5) und eine Vielzahl von in Umfangsrichtung angeordneten Nuten (6), die sich von der Stirnseite (4) zur weiteren Stirnseite (5) erstrecken, aufweist, und eine Statorwicklung (7), die eine Anzahl N Stränge (U, V, W) aufweist, wobei N ≥ 3, wobei
- jeder Strang (U, V, W) mehrere Wicklungszonen (24, 24a-f) in den Nuten (6) belegt und wenigstens einen zusammenhängenden Strompfad (8a, 8b) mit einem ersten Ende (18a, 18b) und mit einem dem ersten Ende (18a, 18b) entgegengesetzten zweiten Ende (19a, 19b) aufweist, wobei
- jede Wicklungszone (24, 24a-f) radial in erste bis L-te Lagen (25a-f) untergliedert ist, die nach ihrer Reihenfolge in Radialrichtung benannt sind, wobei die Lagen (25a-f) erste bis (L/2)-te Doppellagen (26a-c) ausbilden, wobei die i-te Doppellage (26a-c) die (2i-1)-te (25a, 25c, 25e) und die (2i)-te Lage (25b, 25d, 25f) für alle 1 ≤ i ≤ (L/2) umfasst, wobei L ≥ 4 und gerade ist, wobei
- die j-te Doppellage (26b, 26c) gegenüber der (j-1)-ten Doppellage (26a, 26b) für alle 2 ≤ j ≤ (L/2) um eine Nut (6) entlang einer vorgegebenen Umfangsrichtung (27a) versetzt ist, wobei N, L, i und j natürliche Zahlen sind, wobei der Strompfad (8a, 8b) eine kombinierte Wellen- und Schleifenwicklung, die sich über alle Doppellagen (26a-c) erstreckt, ausbildet.

## Beschreibung

Die vorliegende Erfindung betrifft einen Stator für eine elektrische Maschine, aufweisend einen Statorkern, welcher eine Längsachse, eine Stirnseite, eine der Stirnseite gegenüberliegende weitere Stirnseite und eine Vielzahl von in Umfangsrichtung angeordneten Nuten, die sich von der Stirnseite zur weiteren Stirnseite erstrecken, aufweist, und eine Statorwicklung, die eine Anzahl N Stränge aufweist, wobei N ≥ 3, wobei jeder Strang mehrere Wicklungszonen in den Nuten belegt und wenigstens einen zusammenhängenden Strompfad mit einem ersten Ende und mit einem dem ersten Ende entgegengesetzten zweiten Ende aufweist, wobei jede Wicklungszone radial in erste bis L-te Lagen untergliedert ist, die nach ihrer Reihenfolge in Radialrichtung benannt sind, wobei die Lagen erste bis (L/2)-te Doppellagen ausbilden, wobei die i-te Doppellage die (2i-1)-te und die (2i)-te Lage für alle 1 ≤ i ≤ (L/2) umfasst, wobei L ≥ 4 und gerade ist, wobei die j-te Doppellage gegenüber der (j-1)-ten Doppellage für alle 2 ≤ j ≤ (L/2) um eine Nut entlang einer vorgegebenen Umfangsrichtung versetzt ist, wobei N, L, i und j natürliche Zahlen sind.

Daneben betrifft die Erfindung eine elektrische Maschine und ein Fahrzeug.

Aus der CN 109 038 878 A ist ein Stator für einen dreiphasigen Motor mit einem Statorkern und einer Vielzahl von im Statorgehäuse definierten Nuten bekannt. Statorwicklungen sind in sechs Lagen in den Nuten angeordnet. Wenigstens zwei benachbarte Lagen sind um eine Nut verschoben.

Bei Statoren für eine elektrische Maschine wird eine geringe Bauhöhe, die Material und die damit verbundenen Kosten spart angestrebt. Demzufolge wird eine symmetrisch gewickelte Statorwicklung mit geringem Wicklungsüberhang an den Stirnseiten angestrebt. Zudem ist ein einfacher Anschluss der Stränge an die Stromversorgung vorteilhaft. Darüber hinaus soll eine automatisierte Produktion mit hoher Prozesszuverlässigkeit ermöglicht werden. Wünschenswert sind ferner geringe ohmsche Verluste entlang der Strompfade, um den Stator effizient betreiben zu können. Ebenso wird eine gute Symmetrie der Statorwicklung angestrebt. Der Erfindung liegt die Aufgabe zugrunde, eine verbesserte Möglichkeit zum Betreiben einer elektrischen Maschine für ein Fahrzeug anzugeben.

Diese Aufgabe wird erfindungsgemäß bei einem Stator der eingangs genannten Art dadurch gelöst, dass der Strompfad eine kombinierte Wellen- und Schleifenwicklung, die sich über alle Doppellagen erstreckt, ausbildet.

Der erfindungsgemäße Stator für eine elektrische Maschine weist einen Statorkern auf. Der Statorkern weist eine Längsachse, eine Stirnseite, eine weitere Stirnseite und eine Vielzahl von Nuten auf. Die weitere Stirnseite liegt der Stirnseite gegenüber. Die Nuten sind in Umfangsrichtung angeordnet. Die Nuten erstrecken sich von der Stirnseite zur weiteren Stirnseite. Der Stator weist ferner eine Statorwicklung auf. Die Statorwicklung weist eine Anzahl N Stränge auf, wobei N ≥ 3. Jeder Strang belegt mehrere Wicklungszonen in den Nuten. Jeder Strang weist wenigstens einen zusammenhängenden Strompfad auf. Der Strompfad weist ein erstes Ende und ein dem ersten Ende entgegengesetztes zweites Ende auf. Jede Wicklungszone ist radial in erste bis L-te Lagen untergliedert. Die Lagen sind nach ihrer Reihenfolge in Radialrichtung benannt. Die Lagen bilden erste bis (L/2)-te Doppellagen aus. Die i-te Doppellage umfasst die (2i-1)-te und die (2i)-te Lage für alle 1 ≤ i ≤ (L/2), wobei L ≥ 4 und gerade ist. Die j-te Doppellage ist gegenüber der (j1)-ten Doppellage für alle 2 ≤ j ≤ (L/2) um eine Nut entlang einer vorgegebenen Umfangsrichtung versetzt. N, L, i und j sind natürliche Zahlen. Der Strompfad bildet eine kombinierte Wellen- und Schleifenwicklung aus. Die kombinierte Wellenund Schleifenwicklung erstreckt sich über alle Doppellagen.

Die kombinierte Wellen- und Schleifenwicklung, bei der der Strompfad in zwei in Umfangsrichtung benachbarten Wicklungszonen jede Doppellage belegt und dann in Umfangsrichtung in einer weiteren benachbarten Wicklungszone fortgesetzt wird, erlaubt in Verbindung mit den versetzten Doppellagen eine Verkürzung zumindest eines Teils der Verbindungen zwischen den Wicklungszonen. Dadurch kann der Strompfad zumindest abschnittsweise kurzgehalten werden, wodurch nur geringe ohmsche Verluste entstehen. Es wird so ein energieeffizient betreibbarer Stator für eine elektrische Maschine ausgebildet. Zudem verbessert sich durch das Versetzen das Drehmomentmomentverhalten, insbesondere die Drehmomentwelligkeit, der elektrischen Maschine. Dadurch kann insbesondere das Geräusch- und Vibrationsverhalten verbessert werden.

Der Statorkern ist typischerweise aus einer Vielzahl axial geschichtet angeordneten und/oder gegeneinander isolierter Einzelblechen ausbildet. Der Statorkern kann insoweit auch als Statorblechpaket bezeichnet werden. In jeder Wicklungszone sind typischerweise ausschließlich zu demselben Strang gehörende Abschnitte des Strompfads angeordnet.

Vorzugsweise beträgt die Anzahl der Stränge genau drei oder genau sechs. Besonders bevorzugt beträgt die Anzahl der Lagen genau sechs oder genau acht oder genau zehn. Vorzugsweise ist die erste Lage die radial innerste oder die radial äußerste Lage. Die vorgegebene Umfangsrichtung kann auch als vorgegebene Orientierung der Umfangsrichtung aufgefasst oder bezeichnet werden. Die vorgegebene Umfangsrichtung kann der Uhrzeigersinn oder der gegen Uhrzeigersinn mit Blick auf die Stirnseite sein.

Die Statorwicklung kann wenigstens vier, bevorzugt wenigstens sechs Pole, besonders bevorzugt wenigstens acht Pole aufweisen. Bevorzugt beträgt die Anzahl der Pole genau vier oder genau sechs oder genau acht. Bevorzugt entspricht die Anzahl der Wicklungszonen, die ein jeweiliger Strang in den Nuten belegt, dem Doppelten der Anzahl von Polpaaren.

Es können insgesamt wenigstens vierundzwanzig, bevorzugt wenigstens sechsunddreißig, besonders bevorzugt wenigstens vierundfünfzig Nuten vorgesehen sein. Die Anzahl der Nuten kann genau vierundzwanzig, genau sechsunddreißig, genau achtundvierzig, genau vierundfünfzig oder genau zweiundsiebzig betragen.

Besonders bevorzugt ist der Strompfad durch mehrere Verbindungsabschnitte erster Art, die an der Stirnseite angeordnet sind, mehrere Verbindungsabschnitte zweiter Art, die an der weiteren Stirnseite angeordnet sind, und mehrere Innenabschnitte, die innerhalb der Nuten angeordnet und mittels der Verbindungsabschnitte in Reihe geschaltet sind, ausgebildet.

Um die Statorwicklung als Formleiter- bzw. Haarnadelwicklung auszubilden, kann jeder Strompfad durch Formleiter ausgebildet sein. Dabei können Formleiter vorgesehen sein, die zwei der Innenabschnitte und einen die zwei Innenabschnitte verbindenden Verbindungsabschnitt erster Art ausbilden. Jeweils zwei der Formleiter können an der weiteren Stirnseite einen Verbindungsabschnitt zweiter Art ausbilden, indem sie elektrisch leitend und mechanisch, insbesondere stoffschlüssig, miteinander verbunden sind. Insbesondere ist jeder Formleiter aus einem mehrfach gebogenen Metallstab ausgebildet. Vorzugsweise ist jeder Formleiter aus Kupfer gebildet. Typischerweise bildet jede Lage in jeder Nut einen Aufnahmeplatz für genau einen Innenabschnitt aus.

In bevorzugter Ausgestaltung schaltet jeder Verbindungsabschnitt erster Art zwei in unterschiedlichen Doppellagen angeordnete Innenabschnitte in Reihe.

Es wird ferner bevorzugt, dass jeder Verbindungsabschnitt zweiter Art einen in einer geradzahlig benannten Lage angeordneten Innenabschnitt mit einem in einer ungeradzahlig benannten Lage angeordneten Innenabschnitt, der dem in der geradzahlig benannten Lage angeordneten Innenabschnitt entlang der vorgegebenen Umfangsrichtung oder entlang einer der vorgegebenen Umfangsrichtung entgegengesetzten Umfangsrichtung nachfolgt, in Reihe schaltet. Dies ermöglicht es, dass jeder Verbindungsabschnitt zweiter Art entweder radial nach innen oder radial nach außen verläuft, sodass durch eine einheitliche Radialerstreckung die Fertigungskomplexität verringert wird. Insbesondere bei einer Ausbildung der Verbindungsabschnitte zweiter Art durch zwei der Formleiter kann ein einfach konstruiertes Werkzeug verwendet werden, um eine entsprechende Biegung von freien Enden der Metallstäbe zur Ausbildung der Verbindungsabschnitte zweiter Art zu realisieren. Typischerweise gehören die geradzahlig benannte Lage und die ungeradzahlig benannten Lage, in welchen die durch den Verbindungsabschnitt zweiter Art in Reihe geschalteten Innenabschnitte angeordnet sind, zu ein und derselben Doppellage.

In vorteilhafter Ausgestaltung kann ferner vorgesehen sein, dass die Enden des Strompfads in bezüglich der Umfangsrichtung benachbarten Wicklungszonen angeordnet sind. Dadurch können die beiden Enden nah aneinander aus dem Statorkern herausgeführt werden, um sie an eine Stromversorgung anzuschließen.

Bevorzugt ist ferner, dass für jeden Strang ein erster und ein zweiter Strompfad vorgesehen sind. Diese Strompfade können dann, wie unten im Detail noch beschrieben wird, parallel oder in Reihe verschaltet werden. Vorzugsweise sind in jeder Doppellage derselben Nut ein Innenabschnitt des ersten Strompfads und ein Innenabschnitt des zweiten Strompfads angeordnet.

Insbesondere befinden sich das erste Ende des ersten Strompfads und das erste Ende des zweiten Strompfads in derselben Nut. Das erste Ende des ersten Strompfads und das erste Ende des zweiten Strompfads können sich ferner in derselben Doppellage befinden.

Ferner können sich das zweite Ende des ersten Strompfads und das zweite Ende des zweiten Strompfads in unterschiedlichen, insbesondere unmittelbar benachbarten, Nuten befinden. Außerdem können sich das zweite Ende des ersten Strompfads und das zweite Ende des zweiten Strompfads in unterschiedlichen, insbesondere unmittelbar benachbarten, Doppellagen befinden.

Bevorzugt umfasst der Stator ferner eine Sternpunktverbindung und für jeden Strang einen Phasenanschluss. Der Stator kann auch eine weitere Sternpunktverbindung aufweisen.

Gemäß einer ersten Ausgestaltungsalternative sind die ersten Enden der Strompfade eines jeweiligen Strangs an den Phasenanschluss für den jeweiligen Strang angeschlossen. Dabei ist es möglich, dass das zweite Ende eines jeweiligen Strompfads eines jeweiligen Strangs an die Sternpunktverbindung angeschlossen ist oder dass das zweite Ende des ersten Strompfads eines jeweiligen Strangs an die Sternpunktverbindung angeschlossen ist und das zweite Ende des zweiten Strompfads eines jeweiligen Strangs an die weitere Sternpunktverbindung angeschlossen ist. So können parallele Strompfade mit einem Sternpunkt oder zwei Sternpunkten durch die äußere Beschaltung der Strompfade ausgebildet werden.

Gemäß einer zweiten alternativen Ausgestaltung sind die Strompfade eines jeweiligen Strangs in Reihe geschaltet. Dabei kann eines der Enden des ersten Strompfads eines jeweiligen Strangs an den Phasenanschluss für den Strang angeschlossen sein. Eines der Enden des zweiten Strompfads eines jeweiligen Strangs kann an die Sternpunktverbindung angeschlossen sein. Die übrigen Enden der Strompfade können aneinander angeschlossen sein.

In vorteilhafter Ausgestaltung kann eine gute Symmetrie der Statorwicklung erzielt werden, wenn sich der erste Strompfad und der zweite Strompfad vom ersten Ende zum zweiten Ende in entgegengesetzte Umfangsrichtungen um den Statorkern erstrecken.

Bevorzugt ist jede Wicklungszone in Umfangsrichtung in erste bis q-te Teilwicklungszonen untergliedert, die jeweils alle Lagen umfassen und entsprechend ihrer Reihenfolge in Umfangsrichtung, insbesondere ihrer Reihenfolge entgegen der vorgegebenen Umfangsrichtung, benannt sind. Der Strompfad kann erste bis q-te Teilwicklungen aufweisen, die in der Reihenfolge ihrer Benennung in Reihe geschaltet sind, wobei bei q ≥ 2 und eine natürliche Zahl ist. Die Teilwicklungen können in unterschiedlichen Teilwicklungszonen, insbesondere die k-te Teilwicklung in der k-ten Teilwicklungswicklungszone für alle 1 ≤ k ≤ q, angeordnet sein. k ist dabei eine natürliche Zahl.

In bevorzugter Ausgestaltung bildet jede Teilwicklung einen vollen Umlauf um den Statorkern aus.

Vorzugsweise ist ferner vorgesehen, dass bei einem des wenigstens einen Strompfads, insbesondere beim ersten Strompfad, eine jeweilige Teilwicklung einen Satz von ersten bis P-ten Leiterfolgen erster Art umfasst, die in der Reihenfolge ihrer Benennung bezüglich des Strompfads aufeinander folgen und jeweils in zwei unmittelbar benachbarten Wicklungszonen angeordnet sind. Dabei kann vorgesehen sein, dass jede Leiterfolge erster Art erste bis (L/2)-te Paare von einem ersten der Innenabschnitte, und einem zweiten der Innenabschnitte umfasst und die Paare entsprechend ihrer Reihenfolge entlang des Strompfads benannt sind. In bevorzugter Weiterbildung sind die ersten und zweiten Innenabschnitte in unterschiedlichen Lagen der der Benennung des Paars entsprechenden Doppellage angeordnet. Ferner können die ersten bis (P-1)-ten Leiterfolgen erster Art durch einen der Verbindungsabschnitte, insbesondere der Verbindungsabschnitte erster Art, mit der entlang des Strompfads nachfolgenden Leiterfolge erster Art verbunden sein und die nachfolgende Leiterfolge erster Art in zwei unmittelbar benachbarten Wicklungszonen angeordnet sein.

Bei den Leiterfolgen erster Art beträgt ein Abstand zwischen den Innenabschnitten des ersten bis (L/2)-ten Paars vorzugsweise N·q. So kann vorteilhafterweise durch die Verbinder zweiter Art eine einheitliche Sprungweite zwischen den durch sie verbundenen Innenabschnitten ausgebildet werden.

Ein Abstand zwischen dem zweiten Innenabschnitt des a-ten Paars zum ersten Innenabschnitt des (a+1)-ten Paars beträgt vorzugsweise N·q-1 für alle natürlichen Zahlen 1 ≤ a ≤ (L/2)-1. Ein Abstand zwischen dem zweiten Innenabschnitt des (L/2)-ten Paars der b-ten Leiterfolge erster Art zum ersten Innenabschnitt des ersten Paars der (b+1)-ten Leiterfolge erster Art beträgt vorzugsweise N·q-2 für alle natürlichen Zahlen 1 ≤ b ≤ P-1. Ein Abstand zwischen dem zweiten Innenabschnitt des (L/2)-ten Paars der P-ten Leiterfolge erster Art der c-ten Teilwicklung und dem ersten Innenabschnitt des ersten Paars der ersten Leiterfolge erster Art der (c+1)ten Teilwicklung beträgt vorzugsweise N·q-3 für alle natürlichen Zahlen 1 ≤ c ≤ q-1. Da die Sprungweiten hier ersichtlich kleiner als N·q sind, kann die Länge des Leiterfolgen erster Art aufweisenden Strompfads reduziert werden, um ohmsche Verluste gering zu halten.

Vorzugsweise ist ferner vorgesehen, dass bei einem des wenigstens einen Strompfads, insbesondere beim zweiten Strompfad, eine jeweilige Teilwicklung einen Satz von ersten bis P-ten Leiterfolgen zweiter Art umfasst, die in der Reihenfolge ihrer Benennung bezüglich des Strompfads aufeinander folgen und jeweils in ersten bis vierten unmittelbar benachbarten Wicklungszonen angeordnet sind. Es ist dabei bevorzugt, dass jede Leiterfolge zweiter Art erste bis (L/2)-te Paare von einem ersten der Innenabschnitte, und einem zweiten der Innenabschnitte umfasst und die Paare entsprechend ihrer Reihenfolge entlang des Strompfads benannt sind, wobei die ersten und zweiten Innenabschnitte in unterschiedlichen Lagen derselben Doppellage angeordnet sind. Vorzugsweise ist dabei vorgesehen, dass das erste Paar in der ersten Doppellage angeordnet ist, wobei das zweite Paar in der (L/2)-ten Doppellage angeordnet ist, wobei das dritte Paar in der zweiten Doppellage angeordnet ist oder die dritten bis (L/2)-ten Paare in der zweiten bis [(L/2)-1]-ten Doppellage angeordnet sind. Bevorzugt ist vorgesehen, dass die dritte Wicklungszone, in welcher die Innenabschnitte der ersten bis (P-1)-ten Leiterfolgen zweiter Art angeordnet sind, die erste Wicklungszone, in welcher die der Leiterfolge bezüglich des Strompfads nachfolgende Leiterfolge angeordnet ist, ist, und/oder dass die vierte Wicklungszone, in welcher die Innenabschnitte der ersten bis (P-1)-ten Leiterfolgen zweiter Art angeordnet sind, die zweite Wicklungszone, in welcher die der Leiterfolge bezüglich des Strompfads nachfolgende Leiterfolge zweiter Art angeordnet ist, ist.

Bei den Leiterfolgen zweiter Art beträgt ein Abstand zwischen den Innenabschnitten des ersten bis (L/2)-ten Paars vorzugsweise N·q. So kann vorteilhafterweise durch die Verbinder zweiter Art eine einheitliche Sprungweite zwischen den durch sie verbundenen Innenabschnitten ausgebildet werden.

Ein Abstand zwischen dem zweiten Innenabschnitt des ersten Paars zum ersten Innenabschnitt des zweiten Paars beträgt vorzugsweise N·q-2. Ein Abstand zwischen dem zweiten Innenabschnitt des d-ten Paars zum ersten Innenabschnitt des (d+1)-ten Paars beträgt vorzugsweise N·q-1 für alle natürlichen Zahlen 2 ≤ d ≤ (L/2)-1. Ein Abstand zwischen dem zweiten Innenabschnitt des (L/2)-ten Paars der e-ten Leiterfolge erster Art zum ersten Innenabschnitt des ersten Paars der (e+1)-ten Leiterfolge erster Art beträgt vorzugsweise N·q-1 für alle natürlichen Zahlen 1 ≤ e ≤ P-1. Ein Abstand zwischen dem zweiten Innenabschnitt des (L/2)-ten Paars der P-ten Leiterfolge erster Art der f-ten Teilwicklung und dem ersten Innenabschnitt des ersten Paars der ersten Leiterfolge erster Art der (f+1)-ten Teilwicklung beträgt vorzugsweise N·q-2 für alle natürlichen Zahlen 1 ≤ f ≤ q-1. Da die Sprungweiten hier ersichtlich kleiner als N·q sind, kann die Länge des Leiterfolgen zweiter Art aufweisenden Strompfads reduziert werden, um ohmsche Verluste gering zu halten.

P beschreibt insbesondere die Zahl der Polpaare der Statorwicklung. Die natürliche Zahl q kann die Lochzahl bzw. Anzahl der Nuten je Pol und Phase beschreiben. Die Anzahl der Nuten beträgt insbesondere 2·N·q·P.

Die der Erfindung zugrunde liegende Aufgabe wird ferner gelöst durch eine elektrische Maschine, aufweisend einen erfindungsgemäßen Stator und einen drehbar bezüglich des Stators gelagerten Rotor. Die elektrische Maschine ist bevorzugt eine, insbesondere permanent oder elektrisch erregte, Synchronmaschine. Die elektrische Maschine kann auch eine Induktionsmaschine sein. Vorzugsweise ist elektrische Maschine dazu eingerichtet, ein Fahrzeug anzutreiben.

Die der Erfindung zugrunde liegende Aufgabe wird ferner gelöst durch ein Fahrzeug, aufweisend eine erfindungsgemäße Maschine, wobei die elektrische Maschine zum Antreiben des Fahrzeugs eingerichtet ist. Das Fahrzeug kann ein batterieelektrisches Fahrzeug (BEV) oder ein Hybridfahrzeug sein.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze eines ersten Ausführungsbeispiels des erfindungsgemäßen Stators;
- Fig. 2: eine Prinzipskizze von Formleitern gemäß dem ersten Ausführungsbeispiel;
- Fig. 3: ein Blockschaltbild der Statorwicklung gemäß dem ersten Ausführungsbeispiel;
- Fig. 4: ein Wicklungsschema der Statorwicklung gemäß dem ersten Ausführungsbeispiel;
- Fig. 5: eine Detailansicht einer Leiterfolge erster Art;
- Fig. 6: eine Detailansicht einer Leiterfolge zweiter Art;
- Fig. 7: ein Blockschaltbild der Statorwicklung gemäß einem zweiten Ausführungsbeispiel des erfindungsgemäßen Stators;
- Fig. 8: ein Blockschaltbild der Statorwicklung gemäß einem dritten Ausführungsbeispiel des erfindungsgemäßen Stators; und
- Fig. 9: eine Prinzipskizze eines Ausführungsbeispiel des erfindungsgemäßen Fahrzeugs mit einem Ausführungsbeispiel der erfindungsgemäßen elektrischen Maschine.

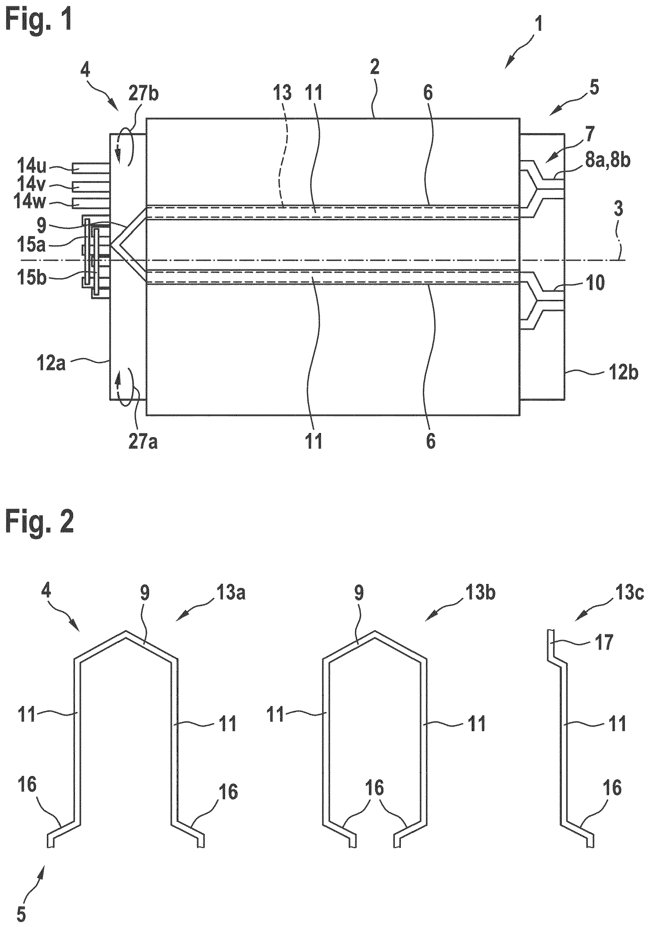

Fig. 1 ist eine Prinzipskizze eines ersten Ausführungsbeispiels eines Stators 1. Der Stator 1 weist einen Statorkern 2 auf. Der Statorkern 2 weist eine Längsachse 3, eine Stirnseite 4 und eine weitere Stirnseite 5, die der Stirnseite 4 gegenüberliegt, auf. Des Weiteren weist der Statorkern 2 eine Vielzahl von in Umfangsrichtung angeordneten Nuten 6 auf, von denen in der Prinzipskizze gemäß Fig. 1 aus Gründen der Übersichtlichkeit lediglich zwei dargestellt sind. Jede Nut 6 erstreckt sich axial von der Stirnseite 4 zur weiteren Stirnseite 5. Im vorliegenden Ausführungsbeispiel ist der Statorkern 2 exemplarisch aus einer Vielzahl von axial geschichtet angeordneten und gegeneinander isolierten Einzelblechen (nicht gezeigt) ausgebildet. Der Statorkern 2 kann insoweit auch als Statorblechpaket erachtet werden.

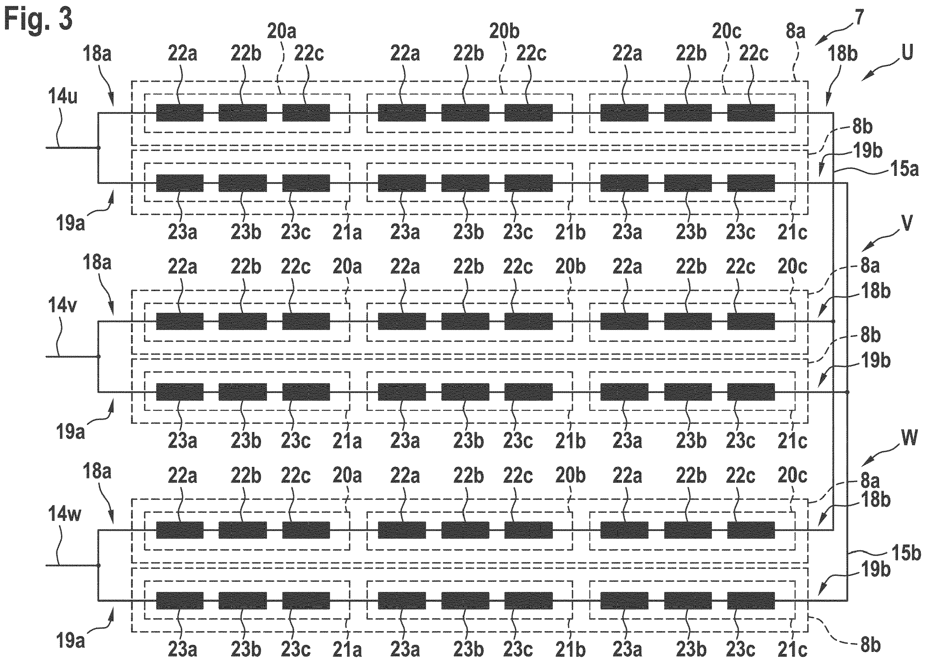

Der Stator 1 weist ferner eine Statorwicklung 7 mit einer Anzahl N = 3 Strängen U, V, W (vergleiche Fig. 3) auf. Jeder Strang weist zwei Strompfade 8a, 8b, die in Fig. 1 ebenfalls nur rein schematisch dargestellt sind, auf. In diesem Ausführungsbeispiel ist ein jeweiliger Strompfad 8a, 8b durch mehrere Verbindungsabschnitte 9 erster Art, die an der Stirnseite 4 angeordnet sind, mehrere Verbindungsabschnitte 10 zweiter Art, die an der weiteren Stirnseite 5 angeordnet sind, und mehrere Innenabschnitte 11, die innerhalb der Nuten 6 angeordnet sind, ausgebildet. Die Innenabschnitte 11 sind durch die Verbindungsabschnitte 9, 10 in Reihe geschaltet. Dabei bilden die ersten Verbindungsabschnitte 9 an der Stirnseite 4 einen Wicklungskopf 12a und an der weiteren Stirnseite 5 einen weiteren Wicklungskopf 12b aus.

Im vorliegenden Ausführungsbeispiel ist die Statorwicklung 7 exemplarisch als Formleiterwicklungen bzw. Haarnadelwicklung ausgebildet. Dazu sind Formleiter 13 vorgesehen. Der Stator 1 weist ferner für jeden Strang U, V, W einen Phasenanschluss 14u, 14v, 14w auf. Daneben sind eine Sternpunktverbindung 15a und eine weitere Sternpunktverbindung 15b vorgesehen.

Fig. 2 ist eine Prinzipskizze von Formleitern 13a, 13b, 13c gemäß dem ersten Ausführungsbeispiel.

Die in Fig. 1 nur schematisch dargestellten Formleiter 13 umfassen Formleiter 13a erster Art, die zwei der Innenabschnitt 11 und einen der Verbindungsabschnitte 9 erster Art ausbilden. Jeweils zwei der Formleiter 13a, 13b, 13c bilden an der weiteren Stirnseite 5 einen der Verbindungsabschnitte zweiter Art 10 aus, indem sie elektrisch leitend und mechanisch stoffschlüssig miteinander verbunden sind. Dazu schließt sich an jeden Innenabschnitt 11 ein Endabschnitt 16 an, der zur Ausbildung des Verbindungsabschnitt 10 zweiter Art mit dem Endabschnitt 16 eines anderen Formleiter 13a, 13b, 13c verbunden ist. Bei den Formleitern 13a erster Art weisen die Endabschnitte 16 bezüglich der Umfangsrichtung voneinander weg. Die Formleiter 13b zweiter Art sind wie die Formleiter 13a erster Art ausgebildet, wobei die Endabschnitte 16 jedoch in Umfangsrichtung einander zugewandt sind.

Die Formleiter 13c dritter Art bilden lediglich einen Innenabschnitt 11 aus und weisen an der weiteren Stirnseite 5 lediglich einen sich an den in Abschnitt 11 anschließenden Endabschnitt 16 auf. An der Stirnseite 4 weisen die Formleiter 13c dritter Art einen Anschlussabschnitt 17 auf, der sich an den in Abschnitt 11 anschließt. Die Anschlussabschnitte 17 der Formleiter 13c dritter Art bilden die Phasenanschlüsse 14u, 14v, 14w (siehe Fig. 1) aus und werden mittels der Sternpunktverbindungen 15a, 15b zu zwei Sternpunkten miteinander verbunden.

Die Formleiter 13, 13a, 13b, 13c sind jeweils einstückig aus einem mehrfach gebogenen Kupferstab ausgebildet.

Fig. 3 ist ein Blockschaltbild der Statorwicklung 7 gemäß dem ersten Ausführungsbeispiel.

Der erste Strompfad eines jeweilen Strangs U, V, W weist einen erstes Ende 18a und ein zweites Ende 18b auf. Der zweite Strompfad 8b weist ein erstes Ende 19a und ein zweites Ende 19b auf. Das zweite Ende 18b, 19b eines jeweiligen Strompfads 8a, 8b liegt dabei dem ersten Ende 18a, 19, des jeweiligen Strompfads 8a 8b gegenüber.

Im vorliegenden Ausführungsbeispiel sind die ersten Enden 18a, 19a der Strompfade 8a, 8b eines jeweiligen Strangs U, V, W an den Phasenanschluss 14u, 14v, 14w des jeweiligen Strangs U, V, W angeschlossen. Das zweite Ende 18b eines jeweiligen ersten Strompfads 8a eines jeweiligen Strangs U, V, W ist an die Sternpunktverbindung 15a angeschlossen. Das zweite Ende 19b des zweiten Strompfads 8b eines jeweiligen Strangs U, V, W ist an die weitere Sternpunktverbindung 15b angeschlossen. Dadurch werden zwei Sternpunkte der Statorwicklung 7 ausgebildet.

Der erste Strompfad 8a weist q = 3 Teilwicklungen, nämlich eine erste Teilwicklung 20a, eine zweite Teilwicklung 20b und eine dritte Teilwicklung 20c, auf. Die Teilwicklungen 20a, 20b, 20c sind entsprechend ihrer Benennung in Reihe geschaltet. Der zweite Strompfad 8b weist q = 3 Teilwicklungen, nämlich eine erste Teilwicklung 21a, eine zweite Teilwicklung 21b und eine dritte Teilwicklung 21c auf. Die Teilwicklungen 21a, 21b, 21c sind entsprechend ihrer Benennung in Reihe geschaltet.

Jede Teilwicklung 20a, 20b, 20c des ersten Strompfads 8a weist P = 3 Leiterfolgen erster Art, nämlich eine erste Leiterfolge 22a erster Art, eine zweite Leiterfolge 22b erster Art und eine dritte Leiterfolge 22c erster Art, auf. Die Leiterfolgen 22a, 22b, 22c erster Art sind entsprechend ihrer Benennung in Reihe geschaltet. Die ersten bis (P-1)-ten Leiterfolgen 22a, 22b erster Art sind durch einen Verbindungsabschnitt 9 erster Art mit der entlang des ersten Strompfads 8a nachfolgenden Leiterfolge 22b, 22c erster Art verbunden und in zwei unmittelbar benachbarten Wicklungszonen 24 angeordnet.

Jede Teilwicklung 21a, 21b, 21c des zweiten Strompfads weist P = 3 Leiterfolgen zweiter Art, nämlich eine erste Leiterfolge 23a zweiter Art, eine zweite Leiterfolge 23b zweiter Art und eine dritte Leiterfolge 23c zweiter Art, auf. Die Leiterfolgen 23a, 23b, 23c zweiter Art sind entsprechend ihrer Benennung in Reihe geschaltet.

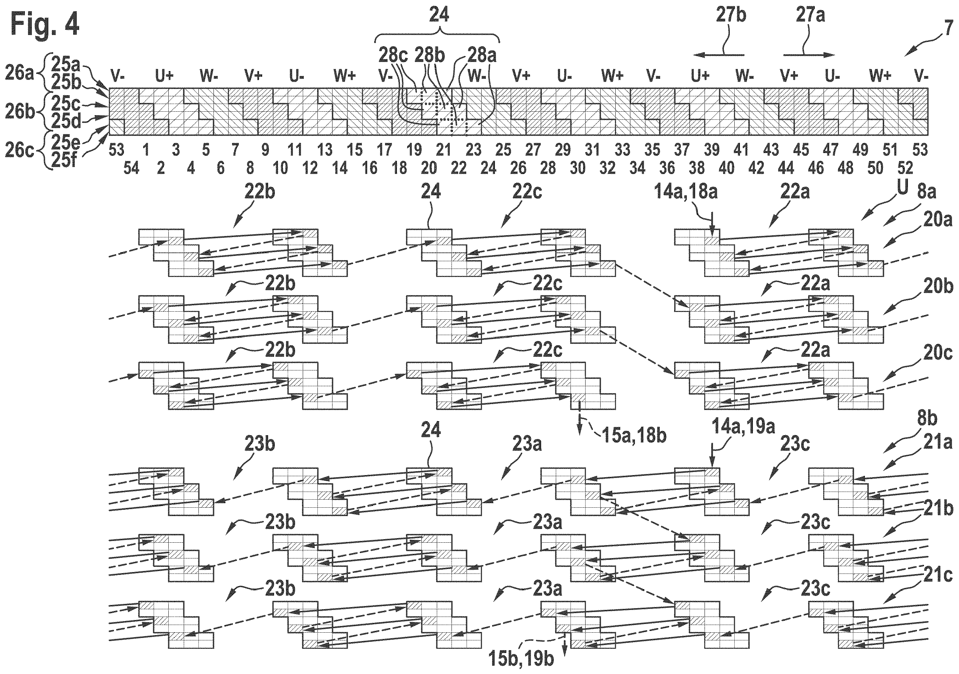

Fig. 4 ist ein Wicklungsschema der Statorwicklung 7 gemäß dem ersten Ausführungsbeispiel. Dabei zeigt eine obere Tabelle die Verteilung von Wicklungszonen 24 auf die Nuten 6, wobei die Wicklungszonen 24 je Strang U, V, W mit unterschiedlichen Schraffuren gekennzeichnet sind. Ein Pluszeichen bzw. ein Minuszeichen hinter einer jeweiligen Bezeichnung der Stränge U, V, W bezeichnet eine Stromrichtung beim Betrieb des Stators 1. Unterhalb der oberen Tabelle ist eine Nummerierung der Nuten 6 gezeigt. Darunter sind die Strompfade 8a, 8b eines der Stränge, hier des Strangs U, exemplarisch für die übrigen Stränge U, V, W dargestellt.

Wie aus Fig. 4 ersichtlich ist, belegt jeder Strang 2·P = 6 Wicklungszonen 24 in den Nuten 6. Die Anzahl 2·P entspricht dabei der Polzahl der Statorwicklung 7. Jede Wicklungszone 24 ist radial in L = 6 Lagen, nämlich eine erste Lage 25a, eine zweite Lage 25b, eine dritte Lage 25c, eine vierte Lage 25d, eine fünfte Lage 25e und eine sechste Lage 25f, untergliedert. Die Lagen 25a-f sind dabei nach ihrer Reihenfolge in Radialrichtung benannt. Exemplarisch liegt die erste Lage 25a radial außen. In jeder Nut 6 bildet eine Lage 25a-f einen Aufnahmeplatz für genau einen Innenabschnitt 11 der Statorwicklung 7 aus.

Die Lagen 25a-f bilden ferner L/2 = 3 Doppellagen, nämlich eine erste Doppellage 26a, eine zweite Doppellage 26b und eine dritte Doppellage 26c, aus. Dabei umfassen die erste Doppellage 26a die erste und zweite Lage 25a, 25b, die zweite Doppellage 26b die dritte und vierte Lage 25c, 25d und die dritte Doppellage 26c die fünfte und sechste Lage 25e, 25f. Allgemein ausgedrückt umfasst die i-te Doppellage 26a-c die (2i-1)-te und die (2i)-te Lage 25a-f für alle 1 ≤ i ≤ (L/2), wobei i eine natürliche Zahl ist.

Die zweite Doppellage 26b ist dabei gegenüber der ersten Doppellage 26a um eine Nut 6 entlang einer vorgegebenen Umfangsrichtung 27a, die vorliegend exemplarisch dem Uhrzeigersinn mit Blick auf die erste Stirnseite 4 entspricht (siehe auch Fig. 1), versetzt. Ferner ist die dritte Doppellage 26c gegenüber der zweiten Doppellage 26b um eine Nut 6 entlang der vorgegebenen Umfangsrichtung 27a versetzt. Allgemein ausgedrückt ist die j-te Doppellage 26b, 26c gegenüber der (j-1)-ten Doppellage 26a, 26b für alle 2 ≤ j ≤ (L/2) um eine Nut 6 entlang der vorgegebenen Umfangsrichtung 27a versetzt, wobei j eine natürliche Zahl ist.

Der Stator 1 zeichnet sich dadurch aus, dass ein jeweiliger Strompfad 8a, 8b eine kombinierte Wellen- und Schleifenwicklung, die sich über alle Doppellagen 26a-c erstreckt, ausbildet.

Unterhalb der oberen Tabelle ist in Fig. 4 ein durch einen Innenabschnitt 11 belegter Aufnahmeplatz durch eine Schraffur gekennzeichnet. Ferner sind Verbindungsabschnitte 9 erster Art durch gestrichelte Pfeilverbindungen zwischen zwei Aufnahmeplätzen und Verbindungsabschnitte 10 zweiter Art durch durchgezogene Pfeilverbindungen dargestellt.

Ersichtlich schaltet jeder Verbindungsabschnitt 9 erster Art in unterschiedlichen Doppellagen 26a-c angeordnete Innenabschnitte 11 in Reihe. Jeder Verbindungsabschnitt 10 schaltet in derselben Doppellage 26a-c angeordnete Innenabschnitt 11 in Reihe. Dabei schaltet jeder Verbindungsabschnitt zweiter Art einen in einer geradzahlig benannten Lage 25b, 25d, 25f angeordneten Innenabschnitt 11 mit einem in einer ungeradzahlig benannten Lage 25a, 25c, 25e angeordneten Innenabschnitt 11, der dem in der geradzahlig benannten Lage 25b, 25d, 25f angeordneten Innenabschnitt 11 entlang der vorgegebenen Umfangsrichtung 27a nachfolgt, in Reihe.

Jede Wicklungszone 24 ist ferner in Umfangsrichtung in q = 3 Teilwicklungszonen, nämlich eine erste Teilwicklungszone 28a, eine zweite Teilwicklungszone 28b und eine dritte Teilwicklungszone 28c, untergliedert ist, die jeweils alle Lagen 25a-f umfassen und entsprechend ihrer Reihenfolge in einer Umfangsrichtung 27b, die hier der vorgegebenen Umfangsrichtung 27a entgegengesetzt ist, benannt sind. Dabei sind die erste Teilwicklung 20a, 21a eines jeweiligen Strompfads 8a, 8b in der ersten Teilwicklungszone 28a, die zweite Teilwicklung 20b, 21b eines jeweiligen Strompfads 8a, 8b in der zweiten Teilwicklungszone 28b und die dritte Teilwicklung 20c, 21c eines jeweiligen Strompfads 8a, 8b in der dritten Teilwicklungszone 28c angeordnet. Allgemein ausgedrückt ist die k-te Teilwicklung in der k-ten Teilwicklungswicklungszone für alle 1 ≤ k ≤ q angeordnet, wobei k eine natürliche Zahl ist.

Fig. 4 zeigt ferner, dass die Enden 18a, 18b, 19a, 19b eines jeweiligen Strompfads 8a, 8b in bezüglich der Umfangsrichtung benachbarten Wicklungszonen 24 angeordnet sind. Außerdem sind das erste Ende 18a des ersten Strompfads 8a und das erste Ende 19a des zweiten Strompfads 8b in unterschiedlichen Lagen 25a, 25b derselben Doppellage 26a und in derselben Nut 6 angeordnet sind. Das zweite Ende 18b des ersten Strompfads 8a und das zweite Ende 19b des zweiten Strompfads 8b sind dagegen in unmittelbar benachbarten Nuten 6 und in unmittelbar benachbarten Doppellagen 26b, 26c angeordnet. Konkret ist das zweite Ende der des ersten Strompfads 8a in der (L/2)-ten, also der dritten Doppellage 26c bzw. in der (L-1)-ten, also der fünften Lage 25e angeordnet. Das zweite Ende des ersten Strompfads 8a ist in der zweiten Doppellage 26b bzw. in der vierten Lage 25d angeordnet.

Die Strompfade 8a, 8b erstrecken sich dabei von ihrem ersten Ende 18a, 19a zu ihrem zweiten Ende 18b, 19b in entgegengesetzte Richtungen q-mal, also dreimal in entgegengesetzte Umfangsrichtungen um den Statorkern 2. Dabei erstreckt sich der erste Strompfad 8a von seinem ersten Ende 18a zu seinem zweiten Ende 18b entlang der vorgegebenen Umfangsrichtung 27a um den Statorkern 2.

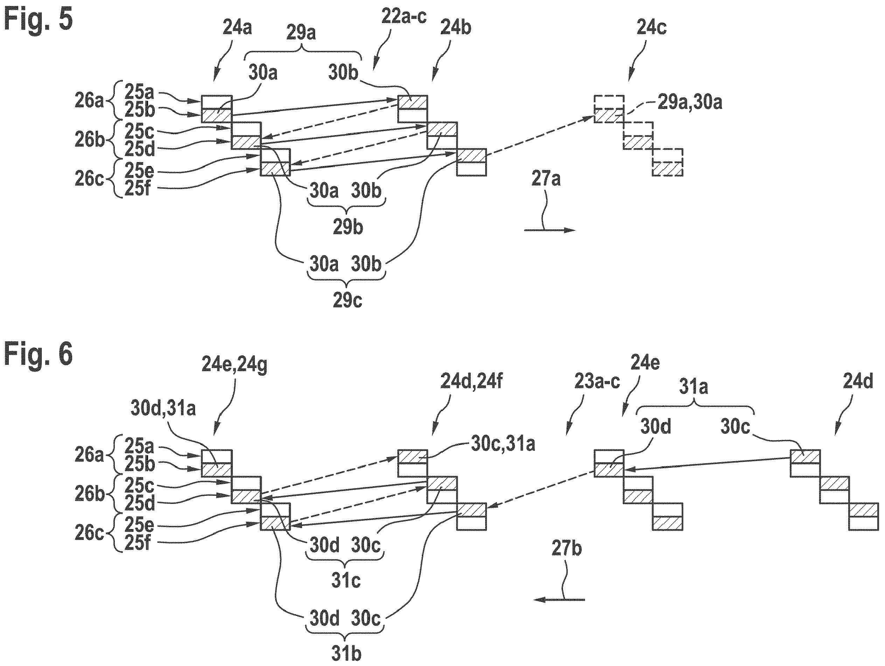

Fig. 5 ist eine Detailansicht einer Leiterfolge 22a, 22b, 22c erster Art.

Jede Leiterfolge 22a, 22b, 22c erster Art weist L/2 = 3 Paare, nämlich ein erstes Paar 29a, ein zweites Paar 29b und ein drittes Paar 29c, von einem ersten der Innenabschnitte 30a, und einem zweiten der Innenabschnitte 30b auf. Die Paare 29a, 29b, 29c sind entsprechend ihrer Reihenfolge entlang des Strompfads benannt. Die ersten und zweiten Innenabschnitte 30a, 30b sind in unterschiedlichen Lagen 25a-f der der Benennung des Paars 29a, 29b, 29c entsprechenden Doppellage 26a, 26a, 26c angeordnet sind. Das heißt, dass das erste Paar 29a ist in der ersten Doppellage 26a angeordnet ist, dass das zweite Paar 29b in der zweiten Doppellage 26b angeordnet ist und dass das dritte Paar 29c in der dritten Doppellage 26c angeordnet ist. Insbesondere sind der erste Innenabschnitt 30a des ersten Paars 29a in der zweiten Lage 25b angeordnet, der zweite Innenabschnitt 30b des ersten Paars 29a in der ersten Lage 25a angeordnet, der erste Innenabschnitt 30a des zweiten Paars 29b in der vierten Lage 25d, der zweite Innenabschnitt 30b des zweiten Paars 29b in der dritten Lage 25c angeordnet, der erste Innenabschnitt 30a des dritten Paars 29c in der sechsten Lage 25f und der zweite Innenabschnitt 30b des dritten Paars 29c in der fünften Lage 25e angeordnet.

Die ersten Innenabschnitte 30a eines jeweiligen Paars 29a, 29b, 29c befinden sich in einer der Wicklungszonen 24a und die zweiten Innenabschnitte 30b in der bezüglich der vorgegebenen Umfangsrichtung 27a nachfolgenden Wicklungszone 24b desselben Strangs U, V, W. Der erste Innenabschnitt 30a des ersten Paars 29a der bezüglich des ersten Strompfads 8a nachfolgenden Leiterfolge 22b, 22c befindet sich in einer zur Wicklungszone 24b unmittelbar benachbarten Wicklungszone 24c desselben Strangs U, V, W.

Fig. 6 ist eine Detailansicht einer Leiterfolge 23a, 23b, 23c zweiter Art.

Die Leiterfolgen 23a, 23b, 23c zweiter Art sind in ersten bis vierten unmittelbar benachbarten Wicklungszonen 24d-g desselben Strangs U, V, W angeordnet. Jede Leiterfolge 23a, 23b, 23c zweiter Art weist L/2 = 3 Paare, nämlich ein erstes Paar 31a, ein zweites Paar 31b und ein dritten Paar 31c, von einem ersten der Innenabschnitte 30c und einem zweiten der Innenabschnitte 30d auf. Die Paare 31a, 31b, 31c sind entsprechend ihrer Reihenfolge entlang des zweiten Strompfads 8b benannt. Die Innenabschnitte 30c, 30d eines jeweiligen Paars 31a, 31b, 31c sind in unterschiedlichen Lagen 25a-f derselben Doppellage 26a-c angeordnet.

Das erste Paar 31a ist in der ersten Doppellage 26a angeordnet. Dabei sind der erste Innenabschnitt 30c in der ersten Lage 25a angeordnet und der zweite Innenabschnitt 30d in der zweiten Lage 25b angeordnet. Das zweite Paar 31b ist in der (L/2)-ten Doppellage, nämlich in der dritten Doppellage 26c, angeordnet. Dabei sind der erste Innenabschnitt 30c in der fünften Lage 25e und der zweite Innenabschnitt 30d in der sechsten Lage 25f angeordnet. Das dritte Paar 31c ist in der zweiten Doppellage 26b angeordnet. Dabei sind der erste Innenabschnitt 30c in der dritten Lage 25c und der zweite Innenabschnitt 30d in der vierten Lage 25d angeordnet.

Das erste Paar 31a ist in der ersten Wicklungszone 24d und in der entlang der entgegengesetzten Umfangsrichtung 27b unmittelbar benachbarten zweiten Wicklungszone 24e angeordnet. Das zweite Paar 31b und das dritte Paar 31c sind in der dritten Wicklungszone 24f, welche entlang der entgegengesetzten Umfangsrichtung 27b unmittelbar zur zweiten Wicklungszone 24e benachbart ist, und in der vierten Wicklungszone 24g, welche entlang der entgegengesetzten Umfangsrichtung 27b unmittelbar zur dritten Wicklungszone 24f benachbart ist, angeordnet.

Die dritte Wicklungszone 24f, in welcher die Innenabschnitte der ersten bis (P-1)-ten Leiterfolgen 23a, 23b zweiter Art angeordnet sind, ist die erste Wicklungszone 24d, in welcher die der Leiterfolge 23a, 23b erster Art bezüglich des Strompfads 8b nachfolgende Leiterfolge 23b, 23c erster Art angeordnet ist. Die vierte Wicklungszone 24g, in welcher die Innenabschnitte der ersten bis (P-1)-ten Leiterfolgen 23a, 23b zweiter Art angeordnet sind, ist die zweite Wicklungszone 23b, in welcher die der Leiterfolge 23a, 23b zweiter Art bezüglich des zweiten Strompfads 8b nachfolgende Leiterfolge 23b, 23c zweiter Art angeordnet ist.

Wie aus Fig. 5 und Fig. 6 ersichtlich ist, sind die Innenabschnitte 30a-d desselben Paars 29a, 29b, 29c, 31a, 31b, 31c sind durch Verbindungsabschnitte 10 zweiter Art verbunden. Die Innenabschnitte 30a-d unterschiedlicher Paare 29a, 29b, 29c, 31a, 31b, 31c sind durch Verbindungsabschnitte 9 erster Art verbunden. Aufeinanderfolgende Leiterfolgen 22a, 22b, 22c, 23a, 23b, 23c sind durch Verbindungsabschnitt 9 erster Art verbunden. Wieder mit Bezug zu Fig. 4 ist ersichtlich, dass aufeinanderfolgende Teilwicklungen 20a, 20b, 20c, 21a, 21b, 21c durch Verbindungsabschnitte 9 erster Art verbunden sind.

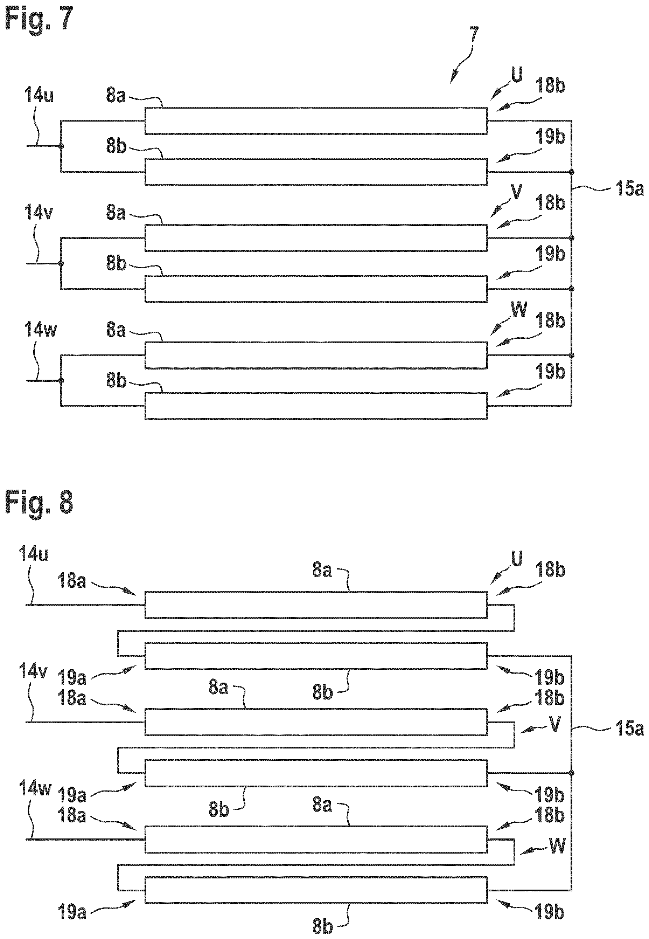

Fig. 7 und Fig. 8 zeigen jeweils ein Blockschaltbild der Statorwicklung 7 gemäß einem zweiten und einem dritten Ausführungsbeispiel eines Stators 1. Auf diese Ausführungsbeispiele lassen sich alle Ausführungen zum ersten Ausführungsbeispiel übertragen, soweit im Folgenden nichts Abweichendes beschrieben ist.

Beim zweiten Ausführungsbeispiel ist eine einzige Sternpunktverbindung 15a vorgesehen. Die zweiten Enden 18b, 19b der Strompfade 8a, 8b der Stränge U, V, W sind mit der Sternpunktverbindung 15a verbunden. Beim dritten Ausführungsbeispiel ist ebenfalls eine einzige Sternpunktverbindung 15a vorgesehen. Das zweite Ende 18b des ersten Strompfads 8a eines jeweiligen Strangs U, V, W ist hier mit dem ersten Ende 19b des zweiten Strompfads 8b des jeweiligen Strangs U, V, W in Reihe geschaltet. Die zweiten Enden 19b des zweiten Strompfads 8b sind mit der Sternpunktverbindung 15b verbunden.

Obwohl der Stator 1 in den vorangegangenen Ausführungsbeispielen als Stator mit P = 3 Polpaaren und einer Lochzahl q = 3 beschrieben wurde, sodass sich bei N = 3 Strängen 2·N·P·q = 54 Nuten 6 ergeben, kann ein Stator 1 gemäß weiteren Ausführungsbeispielen auch P = 3 Polpaare und eine Lochzahl q = 2 oder P = 2 Polpaare und eine Lochzahl q = 2 oder P = 2 Polpaare und eine Lochzahl q = 3 oder P = 4 Polpaare und eine Lochzahl q = 2 oder P = 4 Polpaare und eine Lochzahl q = 3 aufweisen. Bei jeden dieser Ausführungsbeispiele kann die Anzahl der Schichten L = 6 oder L = 8 oder L = 10 betragen.

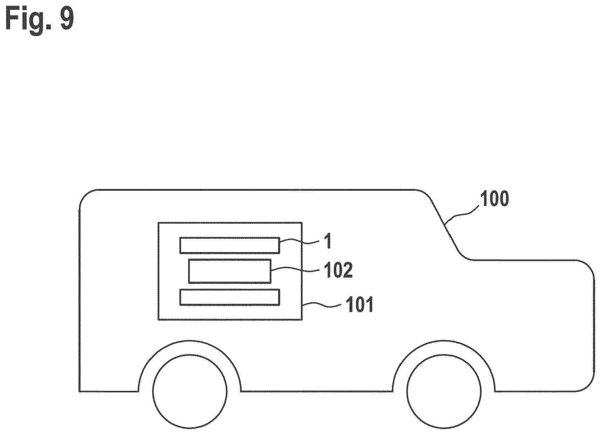

Fig. 9 ist eine Prinzipskizze eines Ausführungsbeispiels eines Fahrzeugs 100 mit einem Ausführungsbeispiel einer elektrischen Maschine 101.

Die elektrische Maschine 101 weist einen Stator 1 gemäß einem der zuvor beschriebenen Ausführungsbeispiele sowie einen Rotor 102 auf. Der Rotor 102 ist drehbar bezüglich des Stators 1 gelagert und als permanenterregter oder fremderregter Rotor 102 ausgeführt. Die elektrische Maschine 101 ist eine Synchronmaschine. Alternativ ist die elektrische Maschine 101 eine Induktionsmaschine.

Die elektrische Maschine 101 ist zum Antreiben des Fahrzeugs 100 eingerichtet, welches insofern ein batterieelektrische Fahrzeug (BEV) oder ein Hybridfahrzeug ist.

## Patentansprüche

1. Stator (1) für eine elektrische Maschine (101), aufweisend einen Statorkern (2), welcher eine Längsachse (3), eine Stirnseite (4), eine der Stirnseite (4) gegenüberliegende weitere Stirnseite (5) und eine Vielzahl von in Umfangsrichtung angeordneten Nuten (6), die sich von der Stirnseite (4) zur weiteren Stirnseite (5) erstrecken, aufweist, und eine Statorwicklung (7), die eine Anzahl N Stränge (U, V, W) aufweist, wobei N ≥ 3, wobei
- jeder Strang (U, V, W) mehrere Wicklungszonen (24, 24a-f) in den Nuten (6) belegt und wenigstens einen zusammenhängenden Strompfad (8a, 8b) mit einem ersten Ende (18a, 18b) und mit einem dem ersten Ende (18a, 18b) entgegengesetzten zweiten Ende (19a, 19b) aufweist, wobei
- jede Wicklungszone (24, 24a-f) radial in erste bis L-te Lagen (25a-f) untergliedert ist, die nach ihrer Reihenfolge in Radialrichtung benannt sind, wobei die Lagen (25a-f) erste bis (L/2)-te Doppellagen (26a-c) ausbilden, wobei die i-te Doppellage (26a-c) die (2i-1)-te (25a, 25c, 25e) und die (2i)-te Lage (25b, 25d, 25f) für alle 1 ≤ i ≤ (L/2) umfasst, wobei L ≥ 4 und gerade ist, wobei
- die j-te Doppellage (26b, 26c) gegenüber der (j-1)-ten Doppellage (26a, 26b) für alle 2 ≤ j ≤ (L/2) um eine Nut (6) entlang einer vorgegebenen Umfangsrichtung (27a) versetzt ist, wobei N, L, i und j natürliche Zahlen sind,
**dadurch gekennzeichnet, dass**
der Strompfad (8a, 8b) eine kombinierte Wellen- und Schleifenwicklung, die sich über alle Doppellagen (26a-c) erstreckt, ausbildet.

2. Stator nach Anspruch 1, wobei
der Strompfad (8a, 8b) durch mehrere Verbindungsabschnitte (9) erster Art, die an der Stirnseite (4) angeordnet sind, mehrere Verbindungsabschnitte (10) zweiter Art, die an der weiteren Stirnseite (5) angeordnet sind, und mehrere Innenabschnitte (11, 30a-d), die innerhalb der Nuten (6) angeordnet und mittels der Verbindungsabschnitte (9, 10) in Reihe geschaltet sind, ausgebildet ist.

3. Stator nach Anspruch 2, wobei
jeder Verbindungsabschnitt (9) erster Art zwei in unterschiedlichen Doppellagen (26a-c) angeordnete Innenabschnitte (11, 30a-d) in Reihe schaltet.

4. Stator nach Anspruch 2 oder 3, wobei
jeder Verbindungsabschnitt (10) zweiter Art einen in einer geradzahlig benannten Lage (25b, 25d, 25f) angeordneten Innenabschnitt (11, 30a, 30d) mit einem in einer ungeradzahlig benannten Lage (25a, 25c, 25e) angeordneten Innenabschnitt (11, 30b, 30c), der dem in der geradzahlig benannten Lage (25b, 25d 25f) angeordneten Innenabschnitt (11, 30a, 30d) entlang der vorgegebenen Umfangsrichtung (27a) oder entlang einer der vorgegebenen Umfangsrichtung (27a) entgegengesetzten Umfangsrichtung (27b) nachfolgt, in Reihe schaltet.

5. Stator nach einem der vorhergehenden Ansprüche, wobei
die Enden (18a, 18b, 19a, 19b) des Strompfads (8a, 8b) in bezüglich der Umfangsrichtung benachbarten Wicklungszonen (24) angeordnet sind.

6. Stator nach einem der vorhergehenden Ansprüche, wobei
für jeden Strang (U, V, W) ein erster und ein zweiter Strompfad (8a, 8b) vorgesehen sind.

7. Stator nach den Ansprüchen 6, wobei
- das erste Ende (18a) des ersten Strompfads (8a) und das erste Ende (19a) des zweiten Strompfads (8b) in derselben Nut (6) und/oder in unterschiedlichen Lagen (25, 25b) derselben Doppellage (26a) angeordnet sind und/oder
- das zweite Ende (18b) des ersten Strompfads (8a) und das zweite Ende (19b) des zweiten Strompfads (8b) in unterschiedlichen, insbesondere unmittelbar benachbarten, Nuten (6) und/oder in unterschiedlichen, insbesondere unmittelbar benachbarten, Doppellagen (26b, 26c) angeordnet sind.

8. Stator nach Anspruch 6 oder 7, ferner umfassend
eine Sternpunktverbindung (15a) und für jeden Strang (U, V, W) einen Phasenanschluss (14u, 14v, 14w), wobei
- die ersten Enden (18a, 19a) der Strompfade (8a, 8b) eines jeweiligen Strangs (U, V, W) an den Phasenanschluss (14u, 14v, 14w) für den jeweiligen Strang (U, V, W) angeschlossen sind und
- das zweite Ende (18b, 19b) eines jeweiligen Strompfads (8a, 8b) eines jeweiligen Strangs (U, V, W) an die Sternpunktverbindung (15a) angeschlossen ist oder
- das zweite Ende (18b) des ersten Strompfads (8a) eines jeweiligen Strangs (U, V, W) an die Sternpunktverbindung (15a) angeschlossen ist, und der Stator (1) eine weitere Sternpunktverbindung (15b) aufweist, an die das zweite Ende (19b) des zweiten Strompfads (8b) eines jeweiligen Strangs (U, V, W) angeschlossen ist;
oder
- die Strompfade (8a, 8b) eines jeweiligen Strangs (U, V, W) in Reihe geschaltet sind, eines der Enden (18b) des ersten Strompfads (8a) eines jeweiligen Strangs (U, V, W) an den Phasenanschluss (14u, 14v, 14w) für den Strang (U, V, W) angeschlossen ist und eines der Enden (19b) des zweiten Strompfads (8b) des jeweiligen Strangs (U, V, W) an die Sternpunktverbindung (15a) angeschlossen ist.

9. Stator nach einem der Ansprüche 6 bis 8, wobei
sich der erste Strompfad (8a) und der zweite Strompfad (8b) vom ersten Ende (18a, 19a) zum zweiten Ende (18b, 19b) in entgegensetzte Umfangsrichtungen (27a, 27b) um den Statorkern (2) erstrecken.

10. Stator nach einem der vorhergehenden Ansprüche, wobei
jede Wicklungszone (24, 24a-f) in Umfangsrichtung in erste bis q-te Teilwicklungszonen (28a-c) untergliedert ist, die jeweils alle Lagen (25a-f) umfassen und entsprechend ihrer Reihenfolge in Umfangsrichtung, insbesondere ihrer Reihenfolge entgegen der vorgegebenen Umfangsrichtung (27a), benannt sind, und der Strompfad (8a, 8b) erste bis q-te Teilwicklungen (20a-c, 21a-c) aufweist, die in der Reihenfolge ihrer Benennung in Reihe geschaltet sind, wobei bei q ≥ 2 und eine natürliche Zahl ist, wobei die Teilwicklungen (20a-c, 21-ac) in unterschiedlichen Teilwicklungszonen (28a-c), insbesondere die k-te Teilwicklung (20a-c, 21a-c) in der k-ten Teilwicklungswicklungszone (28a-c) für alle 1 ≤ k ≤ q, angeordnet sind, wobei k eine natürliche Zahl ist.

11. Stator nach Anspruch 10, wobei
jede Teilwicklung (20a-c, 21a-c) einen vollen Umlauf um den Statorkern (2) ausbildet.

12. Stator nach Anspruch 10 oder 11, wenn abhängig von Anspruch 2, wobei bei einem des wenigstens einen Strompfads (8a) eine jeweilige Teilwicklung (20a-c) einen Satz von ersten bis P-ten Leiterfolgen (22a-c) erster Art umfasst, die in der Reihenfolge ihrer Benennung bezüglich des Strompfads (8a) aufeinander folgen und jeweils in zwei unmittelbar benachbarten Wicklungszonen (24, 24b) angeordnet sind, wobei
- jede Leiterfolge (22a-c) erster Art erste bis (L/2)-te Paare (29a-c) von einem ersten der Innenabschnitte (11, 30a), und einem zweiten der Innenabschnitte (11, 30b) umfasst und die Paare (29a-c) entsprechend ihrer Reihenfolge entlang des Strompfads (8a) benannt sind, wobei
- die ersten und zweiten Innenabschnitte (11, 30a, 30b) in unterschiedlichen Lagen (25a-f) der der Benennung des Paars entsprechenden Doppellage (26a-c) angeordnet sind, wobei
- die ersten bis (P-1)-ten Leiterfolgen (22a, 22b) erster Art durch einen der Verbindungsabschnitte (9), insbesondere der Verbindungsabschnitte erster Art (9), mit der entlang des Strompfads (9) nachfolgenden Leiterfolge (22b, 22c) erster Art verbunden sind und die nachfolgende Leiterfolge (22b, 22c) erster Art in zwei unmittelbar benachbarten Wicklungszonen (24, 24c) angeordnet ist.

13. Stator nach einem der Ansprüche 10 bis 12, wenn abhängig von Anspruch 2, wobei
bei einem des wenigstens einen Strompfads (8b) eine jeweilige Teilwicklung (21a-c) einen Satz von ersten bis P-ten Leiterfolgen (23a-c) zweiter Art umfasst, die in der Reihenfolge ihrer Benennung bezüglich des Strompfads (8b) aufeinander folgen und jeweils in ersten bis vierten unmittelbar benachbarten Wicklungszonen (24, 24d-g) angeordnet sind, wobei
- jede Leiterfolge zweiter Art (21a-c) erste bis (L/2)-te Paare (31a-c) von einem ersten der Innenabschnitte (30c), und einem zweiten der Innenabschnitte (30d) umfasst und die Paare (31a-c) entsprechend ihrer Reihenfolge entlang des Strompfads (8b) benannt sind, wobei
- wobei die ersten und zweiten Innenabschnitte (11, 30c, 30d) in unterschiedlichen Lagen derselben Doppellage (26a-c) angeordnet sind, wobei
- das erste Paar (31a) in der ersten Doppellage (26a) angeordnet ist, wobei
- das zweite Paar (31b) in der (L/2)-ten Doppellage (26c) angeordnet ist, wobei
- das dritte Paar (31c) in der zweiten Doppellage (26b) angeordnet ist oder die dritten bis (L/2)-ten Paare in der zweiten bis [(L/2)-1]-ten Doppellage angeordnet sind, wobei
- die dritte Wicklungszone (24f), in welcher die Innenabschnitte (11, 30c, 30d) der ersten bis (P-1)-ten Leiterfolgen (23a, 23b) zweiter Art angeordnet sind, die erste Wicklungszone (24d), in welcher die der Leiterfolge (21a, 21b) bezüglich des Strompfads (8b) nachfolgende Leiterfolge (23b, 23c) angeordnet ist, ist, wobei
- die vierte Wicklungszone (24g), in welcher die Innenabschnitte (11, 30c, 30d) der ersten bis (P-1)-ten Leiterfolgen (23a, 23b) zweiter Art angeordnet sind, die zweite Wicklungszone (24e), in welcher die der Leiterfolge (23a, 23b) bezüglich des Strompfads (8b) nachfolgende Leiterfolge (23b, 23c) zweiter Art angeordnet ist, ist.

14. Elektrische Maschine (101), aufweisend einen Stator (1) nach einem der vorhergehenden Ansprüche und einen drehbar bezüglich des Stators (1) gelagerten Rotor (102).

15. Fahrzeug (100), aufweisend eine elektrische Maschine (101 nach Anspruch 14, wobei die elektrische Maschine (101) zum Antreiben des Fahrzeugs (100) eingerichtet ist.
